# EUROPEAN PATENT APPLICATION

(11) **EP 1 538 570 A2**
(43) Date of publication of application: **08.06.2005**
(21) Application number: 04028754.2
(22) Date of filing: 03.12.2004
(51) Int. Cl.: G06T 15/70

(54) **Method for graphically displaying audio frequency component in digital broadcast receiver**

(30) Priority: 05.12.2003 KR 2003087823
(71) Applicant: Humax Co., Ltd., Yougin City, Kyonggi-Do 449-080 (KR)
(72) Inventor: Moon, Dong Young, Gwangjin-gu Seoul 134-210 (KR)
(74) Representative: Wagner, Bernhard Peter

(57) **Abstract**

A method for graphically displaying an audio frequency component in a digital broadcast receiver. The method for graphically displaying the audio frequency component in the digital broadcast receiver includes the steps of: extracting a plurality of frequency-band components associated with an audio stream during a decoding process of the audio stream; and generating graphic data corresponding to the extracted frequency-band components, and displaying the graphic data on a screen. Therefore, a frequency component of the encoded audio stream is efficiently extracted without using an additional device or consuming an additional power, and a user can graphically view a frequency component of audio data on a TV screen simultaneously with listening to the audio data.

## Description

### BACKGROUND OF THE INVENTION

### Field of the Invention

The present invention relates to a method for graphically displaying an audio frequency component in a digital broadcast receiver, and more particularly to a method for extracting a frequency component of an audio stream in a digital broadcast receiver such as a Set Top Box (STB), and graphically displaying the extracted frequency component of the audio stream.

### Description of the Related Art

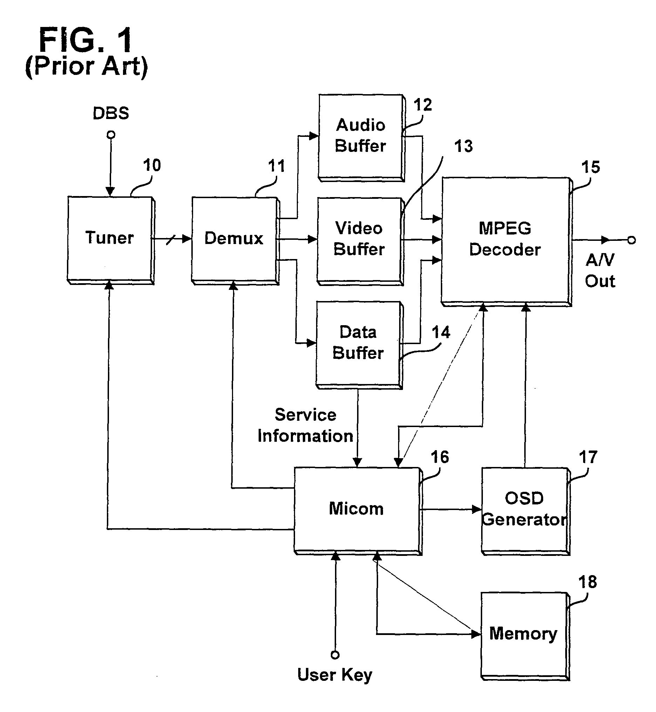

In recent times, digital broadcast receivers, such as STBs, have become widely used, and the digital broadcast receivers are made commercially available and placed on the market. The above-mentioned digital broadcast receiver includes a tuner 10, a demultiplexer (DeMux) 11, an audio buffer 12, a video buffer 13, a data buffer 14, an MPEG decoder 15, a microprocessor 16, an OSD generator 17, and a memory, as shown in Fig. 1.

If a user selects a desired broadcast channel using his or her remote-controller, etc., the microprocessor 16 selects a corresponding broadcast channel by controlling the tuner 10, and divides a data stream received over the selected broadcast channel into audio data, video data, and other data, etc., by controlling the demultiplexer 11.

The MPEG decoder 15 reads data temporarily stored in the audio buffer 12, the video buffer 13, and the data buffer 14, and decodes the read data into original video and audio data.

Upon receiving a control signal from the microprocessor 16, the OSD generator 17 generates a variety of information message images or menu images to be displayed on a screen of an external device such as a TV.

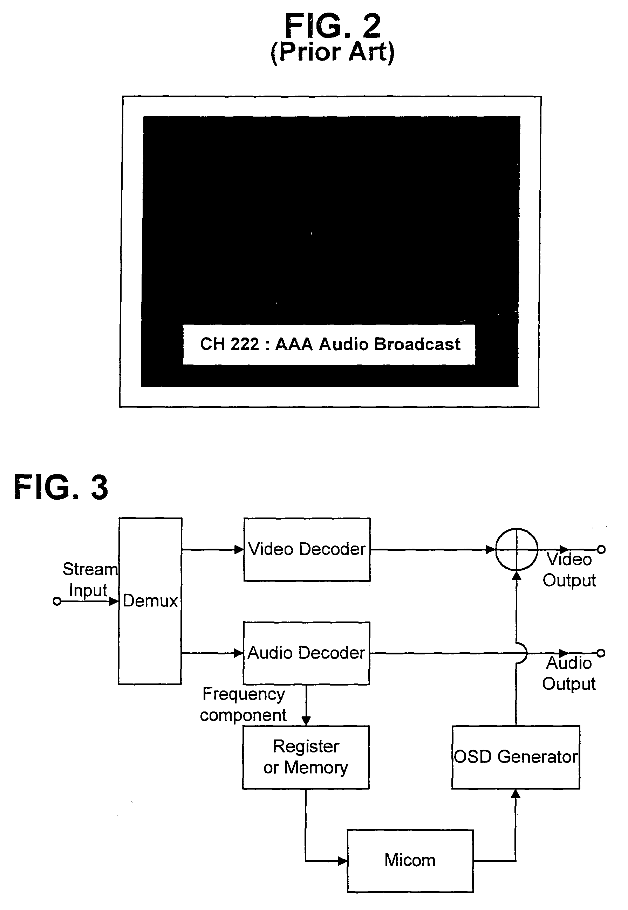

If a user-selected broadcast channel is indicative of an audio broadcast channel, the microprocessor 16 controls a signal-processed audio signal decoded by the MPEG decoder 15 to be outputted via a speaker of the TV, and controls the OSD generator 17 to generate a caption-, blue-colored background-, or still- image including an information message indicative of audio broadcast channel as shown in Fig. 2, such that the generated image is displayed on the TV screen.

Therefore, a user of the digital broadcast receiver selects a desired broadcast channel, and views audio and video signals received over the selected broadcast channel. If the user selects an audio broadcast channel, the user can listen to an audio signal received over the selected audio broadcast channel.

However, if a conventional digital broadcast receiver receives audio data over the audio broadcast channel, a blue-colored background image including an information message indicative of the audio broadcast channel is displayed on the TV screen, such that the user is not visually stimulated, and feels monotonous.

A hardware module or complicated calculation process is necessary to extract a frequency component using PCM audio data having been decoded. Therefore, there has been no digital broadcast receiver capable of graphically displaying components for every frequency band of an audio stream when a broadcast program having no image data, for example, a radio broadcast program or a music broadcast program, is received.

### SUMMARY OF THE INVENTION

Therefore, the present invention has been made in view of the above problems, and it is an object of the present invention to provide a method for efficiently extracting a frequency component of an audio stream input in a state of being encoded in a digital broadcast receiver such as an STB, and graphically displaying the extracted frequency component of the audio stream.

In accordance with the present invention, the above and other objects can be accomplished by a method for graphically displaying an audio frequency component in a digital broadcast receiver, comprising the steps of: a) extracting a plurality of frequency-band components associated with an audio stream during a decoding process of the audio stream; and b) generating graphic data corresponding to the extracted frequency-band components, and displaying the graphic data on a screen.

Preferably, the audio stream is indicative of any one of MPEG-1 audio data, MPEG-2 audio data, and Dolby AC-3 audio data. Preferably, the audio stream is received over a broadcast channel, or is received from an MPEG-based reproducer contained in the digital broadcast receiver.

Preferably, the frequency-band components of the MPEG-1 audio data or the frequency-band components of the MPEG-2 audio data are extracted in a filter bank operation of the decoding process. Preferably, the frequency-band components of the Dolby AC-3 audio data are extracted in an inverse transform operation of the decoding process.

Preferably, the number of extracted frequency bands is adjusted through a predetermined calculation among the frequency-band components separated in the decoding process. Preferably, the extracted frequency-band components are temporarily stored in a register having a plurality of sections classified according to individual frequency bands, such that the stored frequency-band components are used to generate a corresponding graphic image.

Preferably, caption data including information associated with the audio stream is displayed along with the graphic data corresponding to the frequency-band components.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a block diagram illustrating a conventional digital broadcast receiver;
Fig. 2 is an exemplary view illustrating an information message image indicative of an audio broadcast channel;
Fig. 3 is a block diagram illustrating a configuration for implementing a graphic display method of an audio frequency component in accordance with the present invention;
Fig. 4 is a flow chart illustrating a method for extracting an audio frequency component when receiving an audio stream based on the MPEG-1 Layer 3 standard in accordance with a preferred embodiment of the present invention;
Fig. 5 is an exemplary view illustrating a graphic image of an audio frequency component in accordance with the present invention;
Fig. 6 is a flow chart illustrating a method for extracting an audio frequency component when receiving an audio stream based on the MPEG-2 AAC standard in accordance with another preferred embodiment of the present invention; and
Fig. 7 is a flow chart illustrating a method for extracting an audio frequency component when receiving an audio stream based on the Dolby AC-3 standard in accordance with yet another preferred embodiment of the present invention.

### DETAILED DESCRIPTION OF PREFFERRED EMBODIMENTS

Now, preferred embodiments of the present invention will be described in detail with.reference to the annexed drawings. In the drawings, the same or similar elements are denoted by the same reference numerals even though they are depicted in different drawings. In the following description, a detailed description of known functions and configurations incorporated herein will be omitted when it may make the subject matter of the present invention rather unclear.

Fig. 3 is a block diagram illustrating a configuration for implementing a graphic display method of an audio frequency component in accordance with the present invention. In Fig. 3, an input stream may be indicative of a data stream including audio and/or video data received over a broadcast channel, or may also be indicative of an audio stream input from an MP3 player contained in a digital broadcast receiver.

In Fig. 3, the audio stream is input in a state of being compressed by a voice compression algorithm. There are a variety of voice compression algorithms, for example, MPEG-1 Layer 1, Layer 2, Layer 3, MPEG-2 AAC, and Dolby AC-3 algorithms, etc. The above-mentioned voice compression algorithms are adapted to convert audio data into frequency-domain data. In order to reproduce the input audio data, there is needed a procedure for inversely converting the frequency-domain encoded audio data into time-domain data.

Therefore, the present invention stores an audio frequency component used in the above-mentioned procedure for inversely converting the frequency-domain data into the time-domain data in a register or predetermined memory, and enables an external device to refer to the stored audio frequency component.

The audio decoder shown in Fig. 3 inversely converts the input audio stream into time-domain data, and at the same time detects component values for every frequency band of the audio stream at intervals of a predetermined time (e.g., 10 times per second), such that it stores the detected component values in a register or memory. The microprocessor reads the audio frequency component stored in the register at intervals of the predetermined time, and controls the OSD generator to generate a bar-shaped graph corresponding to the audio frequency component. The graph generated by the OSD generator is combined with a video image reproduced by a video decoder, and the resultant graph is displayed on an external display such as a TV. If video data is not contained in the input stream in Fig. 3, a still image including the bar-shaped graph generated by the OSD generator is displayed on the external display without displaying a video image.

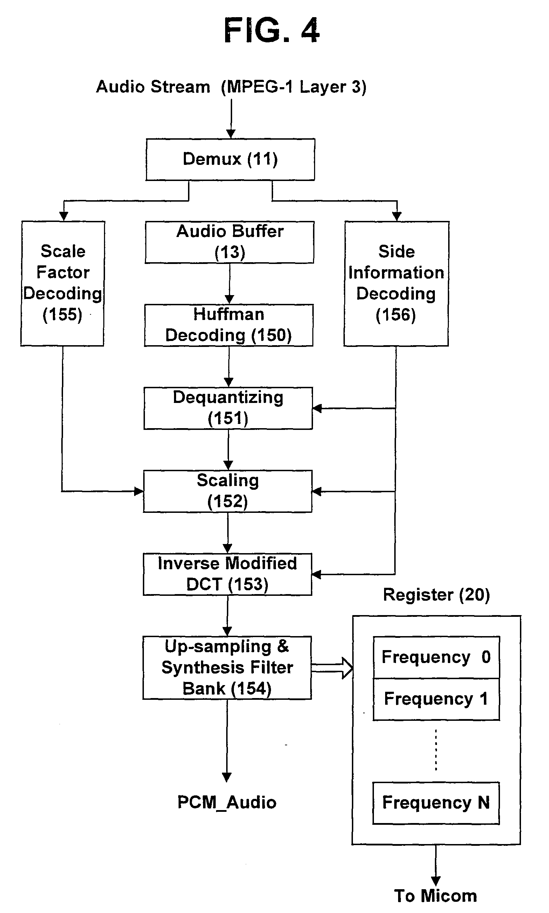

Fig. 4 is a flow chart illustrating a method for extracting an audio frequency component when receiving an audio stream based on the MPEG-1 Layer 3 standard in accordance with a preferred embodiment of the present invention. The MPEG-1 compression algorithm divides audio data into 32 frequency-domain data units, and compresses the divided frequency-domain data units according to auditory characteristics of a human being. Contrary to the above-mentioned compression process, a decoding process uses an Inverse Modified Discrete Cosine Transform (IMDCT) scheme and a synthesis filter bank such that it synthesizes audio data from the 32 frequency components. In this case, the filter bank is indicative of individual component values of 32 frequency bands, such that it records N components (where N<=32) from among overall components in a predetermined register, and synthesizes the audio data. It should be noted that the above process for extracting the N audio frequency components may calculate a mean value of neighbor bands or may perform other simple calculations.

When receiving the audio stream based on the MPEG-1 Layer 3 standard, the demultiplexer 11 divides the received audio stream into audio data, side information data, and scale factor data.

The audio data is temporarily stored in the audio buffer 13, is Huffman-decoded at step 150, and is dequantized at step 151, such that its scale is adjusted by the decoded scale factor information at step 155. Also, the side information decoded at step 156 controls audio data dequantization and a scale operation of the audio data.

The above-mentioned scale-controlled audio data is transmitted to an IMDCT 153 and an Up-sampling & Synthesis filter bank 154, such that frequency-domain audio data is converted into time-domain audio data. The decoded side information data controls an IMDCT operation of the audio data. In the case of the Up-sampling & Synthesis filter bank process 154, component values for every frequency band of the audio data are transmitted to a register 20. The register 20 separately stores the frequency-band component values divided by the synthesis filter bank process 154. For example, if the audio data is indicative of MPEG-1 Layer 3 audio data, individual component values of 32 frequency-domains are stored separately from each other in the register 20.

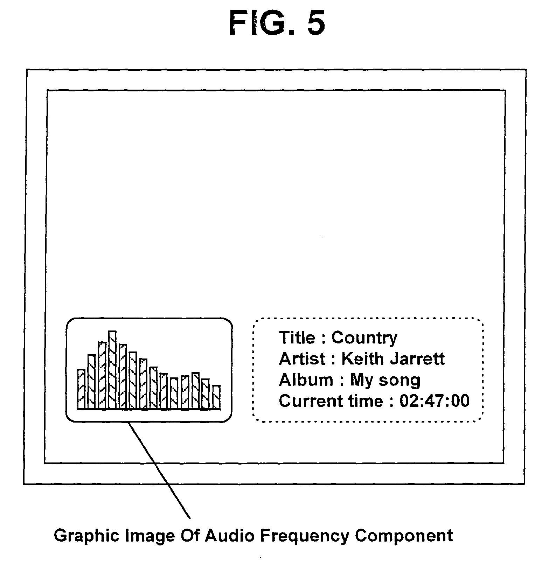

The microprocessor 16 checks audio frequency component values stored in the register 20 at intervals of a predetermined time, controls the OSD generator 17 to generate a graphic image associated with the audio frequency component values as shown in Fig. 5, and displays the generated graphic image on a TV screen.

The microprocessor 16 searches for audio information (e.g., an audio file name, a singer name, and lyrics, etc.) provided over an audio broadcast channel, controls the OSD generator 17 to generate caption data including the audio information in the form of text as shown in Fig. 5, and displays the caption data on the TV screen. Therefore, the user views graphic image associated with audio frequency components and the caption data of audio data displayed on the TV screen, and at the same time listens to the audio data.

However, if a frequency component associated with the audio data is separately extracted after the audio data has been decoded, there is further needed another process for reconverting time-domain audio data into frequency-domain data to calculate component values for every frequency band, such that the size of a device is increased and additional power consumption occurs. In other words, in the case of decoding the audio data, the inventive signal processing procedure capable of extracting a plurality of frequency-band components separately in the decoding process of the audio data is considered to be more effective.

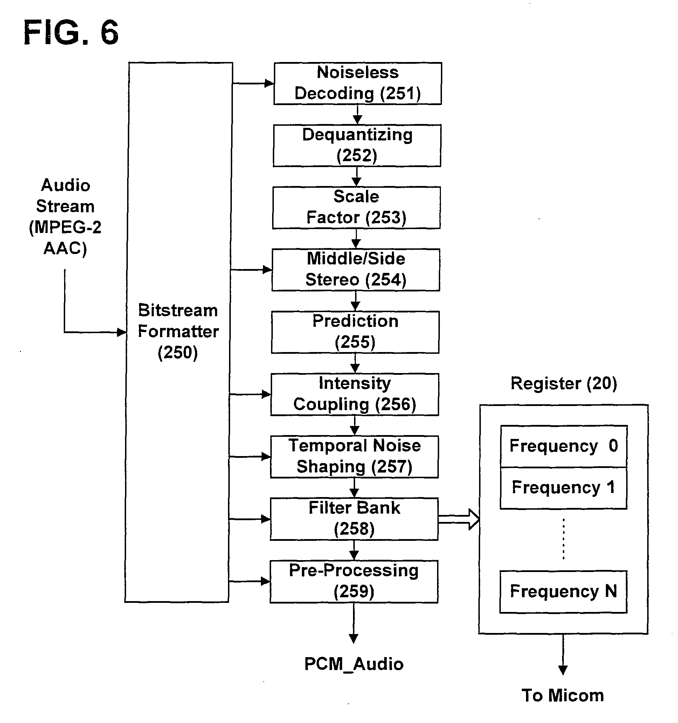

Fig. 6 is a flow chart illustrating a method for extracting an audio frequency component when receiving an audio stream based on the MPEG-2 AAC (Advanced Audio Coding) standard in accordance with another preferred embodiment of the present invention. For example, if the MPEG-2 AAC audio data is provided over an audio broadcast channel, the MPEG-2 AAC audio data is sequentially transmitted to a noiseless decoding unit 251, a dequantizer 252, a scale factor 253, a middle/side stereo 244, a prediction unit 255, an intensity coupling unit 256, a temporal noise shaping unit 257, a filter bank 258, and a pre-processing unit 259 as shown in Fig. 6, such that PCM audio data is generated. During the filter bank process 154, a plurality of frequency-band component values associated with audio data are separately transmitted to the register 20.

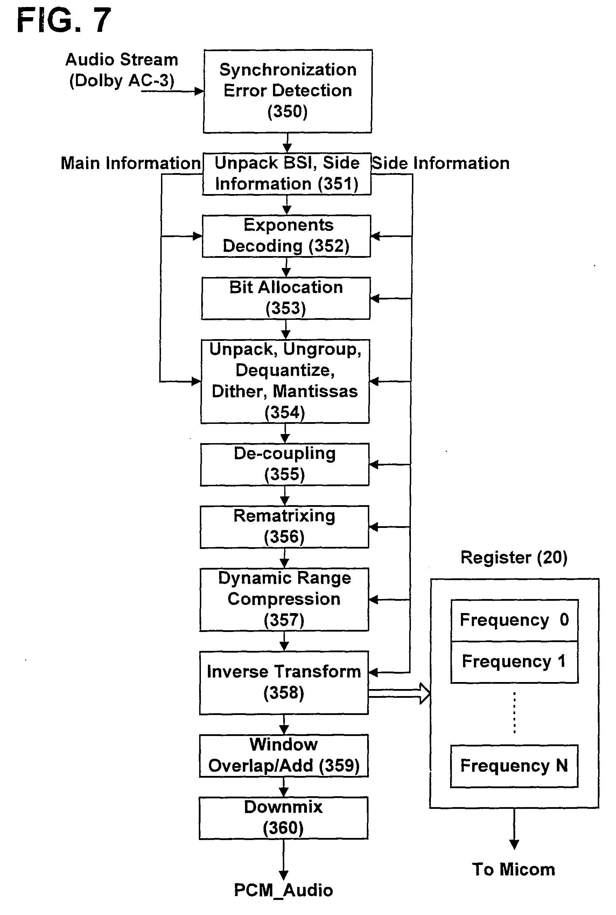

Fig. 7 is a flow chart illustrating a method for extracting an audio frequency component when receiving an audio stream based on the Dolby AC-3 standard in accordance with yet another preferred embodiment of the present invention. For example, if the Dolby AC-3 audio data is provided over an audio broadcast channel, the Dolby AC-3 audio data is sequentially transmitted to a synchronization error detection unit 350, an Unpack Side Information unit 351, an exponent decoding unit 352, a bit allocation unit 353, a dequantizer 354, a decoupling unit 355, a rematrixing unit 356, a dynamic range compression unit 357, an Inverse Transform unit 358, a window overlap/add unit 359, and a downmix unit 360 as shown in Fig. 7, such that PCM audio data is generated. The Dolby AC-3 audio stream is characterized in that it converts 512 audio samples into 256 frequency samples, instead of using a sub-band filter bank.

During the inverse transform process 358, a plurality of frequency-band component values of audio data are transmitted to the register 20, respectively. The register 20 stores 256 frequency-band component values separately from each other.

Therefore, the microprocessor 16 checks audio frequency component values temporarily stored in the register, controls the OSD generator 17 to generate a graphic image associated with the audio frequency component values as shown in Fig. 5, and displays the graphic image on the TV screen.

The microprocessor 16 searches for audio information provided over an audio broadcast channel, controls the OSD generator 17 to generate caption data in the form of text, and displays the caption data on the TV screen. Therefore, the user views graphic image associated with audio frequency components and the caption data of audio data displayed on the TV screen, and at the same time listens to the audio data.

For reference, individual components required for converting the MPEG-1 Layer 3 audio data, the MPEG-2 AAC audio data, and the Dolby AC-3 audio data, etc. into PCM audio data, and decoding the above-mentioned audio data are well known in the art, such that their detailed description will herein be omitted for the convenience of description.

As apparent from the above description, the present invention can efficiently extract a frequency component of an encoded audio stream.

Also, the present invention extracts the frequency component of the audio stream during a decoding process of the audio stream, such that it prevents the size of a device from being increased and also prevents additional power consumption from being generated.

Furthermore, the present invention allows a user to graphically view a frequency component of audio data on a TV screen, simultaneously with listening to the audio data.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method for graphically displaying an audio frequency component in a digital broadcast receiver, comprising the steps of:
a) extracting a plurality of frequency-band components associated with an audio stream during a decoding process of the audio stream; and
b) generating graphic data corresponding to the extracted frequency-band components, and displaying the graphic data on a screen.

2. The method according to claim 1, wherein the audio stream is indicative of any one of MPEG-1 audio data, MPEG-2 audio data, and Dolby AC-3 audio data.

3. The method according to claim 2, wherein the frequency-band components of the MPEG-1 audio data or the frequency-band components of the MPEG-2 audio data are extracted in a filter bank operation of the decoding process.

4. The method according to claim 2, the frequency-band components of the Dolby AC-3 audio data are extracted in an inverse transform operation of the decoding process.

5. The method according to claim 1, wherein the extracting step a) further includes the step of:
adjusting the number of frequency bands through a predetermined calculation among the frequency-band components separated by the decoding process.

6. The method according to claim 1, wherein the extracted frequency-band components are temporarily stored in a register having a plurality of sections classified according to individual frequency bands.

7. The method according to claim 1, wherein the displaying step b) further includes the step of:
generating caption data including information associated with the audio stream, and displaying the caption data on the screen.

8. The method according to claim 1, wherein the audio stream is received over a broadcast channel.

9. The method according to claim 1, wherein the audio stream is input from an MPEG-based reproducer contained in the digital broadcast receiver.

10. The method according to claim 9, wherein the MPEG-based reproducer is indicative of an MP3 player.
